(19) Europäisches Patentamt

European Patent Office

Office européen des brevets

(11) **EP 1 243 636 A1**

(12) **EUROPEAN PATENT APPLICATION**
published in accordance with Art. 158(3) EPC

(43) Date of publication:
25.09.2002 Bulletin 2002/39

(51) Int Cl.⁷: **C10L 1/04**, H01M 8/06

(21) Application number: 00981792.5

(86) International application number:
**PCT/JP00/08946**

(22) Date of filing: 18.12.2000

(87) International publication number:
**WO 01/044412 (21.06.2001 Gazette 2001/25)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 17.12.1999  JP 35956899
15.03.2000  JP 2000071430
24.04.2000  JP 2000012277

(71) Applicant: **Idemitsu Kosan Co., Ltd.
Tokyo 100-8321 (JP)**

(72) Inventors:
• **MATSUMOTO, Hiroto
Sodegaura-shi, Chiba 299-0205 (JP)**
• **KATSUNO, Hisashi
Sodegaura-shi, Chiba 299-0205 (JP)**
• **AKIMOTO, Takashi
Sodegaura-shi, Chiba 299-0205 (JP)**
• **HIRANO, Hiroshi
Sodegaura-shi, Chiba 299-0205 (JP)**
• **IIZUKA, Masashi
Sodegaura-shi, Chiba 299-0205 (JP)**

(74) Representative:
**Gille Hrabal Struck Neidlein Prop Roos
Patentanwälte,
Brucknerstrasse 20
40593 Düsseldorf (DE)**

(54) **FUEL OIL FOR FUEL CELL, FUEL OIL COMPOSITION AND AUTOMOBILE DRIVING SYSTEM**

(57)    A fuel oil for a fuel cell which contains, as a predominant component, a desulfurized light naphtha having a ratio of iso-paraffins to normal paraffins of 1 or more by weight; a fuel oil for a fuel cell, characterized by containing a deeply desulfurized light naphtha and can be used for both a hybrid engine and a fuel cell; and an automobile driving system using the composition. The above fuel oil and fuel oil composition can produce hydrogen with good efficiency, does not affect adversely a reformation catalyst or an electrode of a fuel cell, reduces deterioration of a reformation catalyst or the like, and thus can be used as a fuel oil for a fuel cell suitable for a transportation vehicle such as an automobile. The fuel oil composition can be used also as a fuel oil for a hybrid engine.

EP 1 243 636 A1

## Description

Technical Field

The present invention relates to a fuel oil for use in a fuel cell; a method for producing hydrogen from the fuel oil; a reforming unit for producing hydrogen; a fuel oil composition; and an automobile driving system by use of the composition. More particularly, the invention relates to a fuel oil for use in a fuel cell, which oil comprises hydrocarbon such as a gasoline fraction and is suitable for transportation; a method for producing hydrogen from a fuel oil without performing desulfurization and a reforming unit for producing hydrogen; a low-sulfur-content fuel oil composition which is employable in both a hybrid engine and a fuel cell; and an automobile driving system for driving an automobile mounting a hybrid engine employing the fuel oil composition serving as a fuel.

Background Art

In recent years, new energy-production techniques have attracted attention from the standpoint of environmental issues, and among these techniques a fuel cell has been of particular interest. The fuel cell converts chemical energy to electric energy through electrochemical reaction of hydrogen and oxygen, attaining high energy utilization efficiency. Therefore, studies on realization of fuel cells for public use, industrial use, automobile use, etc. have been carried out extensively.

Fuel cells are categorized in accordance with the type of employed electrolyte, and, a phosphate type, a fused carbonate salt type, a solid oxide type, and a solid polymer type have been known. With regard to hydrogen sources, studies have been conducted on methanol; liquefied natural gas predominantly containing methane; city gas predominantly containing natural gas; LPG predominantly containing propane; a synthetic liquid fuel produced from natural gas serving as a raw material; and petroleum-derived hydrocarbon oils such as naphtha, gasoline, and kerosene.

Specifically, there have been extensively studied methods for producing hydrogen through steam reforming or partial oxidation reforming of the aforementioned hydrogen sources in the presence of a reformation catalyst, since gaseous hydrogen is difficult to handle when hydrogen as such is used as a fuel for a fuel cell. This approach is accompanied by the problems that methanol serving as a hydrogen source provides low energy density and infrastructure of a methanol supply system has not been sufficiently developed. Moreover, the regions where city gas and LPG can be used are limited, and handling of these gases is difficult. These problems are critical, particularly when these gases are actually employed in a fuel cell for transportation means such as automobiles.

In contrast, petroleum-derived hydrocarbon oils, which are liquid at ambient temperature and pressure, are easy to store and handle and have high energy density. In addition, infrastructure of a supply system for these oils is well developed (e.g., gas stations and shops). Thus, these oils are advantageous for use as a hydrogen source.

However, as compared with methanol and natural gas, petroleum-derived hydrocarbon oils are difficult to reform, due to catalyst deterioration caused by coking or catalyst poisoning. Problematically, the service life of a reformation catalyst is comparatively short when these hydrocarbon oils are employed.

From another aspect, complete replacement of internal combustion engines of automobiles with fuel-cell-based engines is difficult, and a fuel which is employable in both types of engines is desired during a transition period for replacement. Particularly, in recent years, direct injection engines and hybrid engines devised to enhance fuel consumption efficiency have attracted attention. Thus, demand has arisen for a fuel which can serve as both a fuel for these engines and a fuel for a fuel cell.

Disclosure of the Invention

Under such circumstances, a first object of the present invention is to provide a fuel oil for use in a fuel cell suitable for transportation by automobiles, which fuel oil can produce hydrogen at high efficiency; has no adverse effect on a reformation catalyst and electrodes of a fuel cell; and causes less deterioration of a reformation catalyst or a similar material.

A second object of the present invention is to provide a fuel oil for use in a fuel cell suitable for transportation by automobiles, the fuel oil having the aforementioned characteristics, and to provide a method for producing hydrogen from the fuel oil without performing desulfurization, and a reforming unit for producing hydrogen.

A third object of the present invention is to provide a low-sulfur-content fuel oil composition which is employable in both a hybrid engine and a fuel cell; and an automobile driving system for driving an automobile mounting a hybrid engine employing the fuel oil composition serving as a fuel.

The present inventors have carried out extensive studies so as to attain the aforementioned objects, and have found that the first object can be attained by a fuel oil for use in a fuel cell predominantly comprising desulfurized light naphtha containing iso-paraffin and normal paraffin at a specific ratio. The inventors have also found that the second object can be attained by a fuel oil for use in a fuel cell containing deeply desulfurized light naphtha. The inventors have further found that a fuel oil composition containing deeply desulfurized light naphtha can be employed in both a hybrid engine and a fuel cell, and that an automobile mounting a hybrid engine can be effectively driven at low fuel consumption by use of the aforementioned fuel oil composition wherein driving within a high load region is basically performed by a motor and driving within a low load region is basically performed by an internal combustion engine, to thereby attain the third object.

The present invention has been accomplished on the basis of these findings.

Accordingly, the present invention provides the following.

(1) A fuel oil for use in a fuel cell comprising, as a predominant component, desulfurized light naphtha having a ratio by weight of iso-paraffin to normal paraffin of at least 1 (hereinafter the fuel oil is referred to as a fuel-cell fuel oil I).

(2) A fuel oil for use in a fuel cell comprising deeply desulfurized light naphtha (hereinafter the fuel oil is referred to as a fuel-cell fuel oil II).

(3) A method for producing hydrogen from the fuel-cell fuel oil II of the above (2) without performing desulfurization.

(4) A reforming unit for producing hydrogen employing the fuel-cell fuel oil II of the above (2) and having no desulfurizer.

(5) A fuel oil composition containing deeply desulfurized light naphtha and being employable in both a hybrid engine and a fuel cell.

(6) An automobile driving system for driving an automobile loading a hybrid engine, wherein the automobile employs a fuel oil composition of the above (5), and the system is configured such that driving within a high load region is basically performed by a motor and driving within a low load region is basically performed by an internal combustion engine.

Best Modes for Carrying Out the Invention

Firstly, the fuel-cell fuel oil I of the present invention will be described.

The fuel-cell fuel oil I of the present invention contains desulfurized light naphtha serving as a predominant component.

Desulfurized light naphtha (hereinafter referred to as DLN) comprises C4 to C7 normal paraffin, iso-paraffin, naphthene, etc. In the present invention, the ratio by weight of iso-paraffin to normal paraffin, both contained in the above DLN, is at least one. In other words, the amount of iso-paraffin must be greater than that of normal paraffin. When the ratio is less than 1, hydrogen production efficiency is poor, and a reformation catalyst and electrodes of a fuel cell are adversely affected. From this viewpoint, the aforementioned ratio of iso-paraffin to normal paraffin is preferably 1.5 or more, more preferably 2 or more.

Generally, DLN is produced by distilling crude oil by means of a normal pressure distillation unit, to thereby yield a light naphtha fraction, and desulfurizing the light naphtha fraction by means of a naphtha desulfurization unit. Alternatively, DLN is produced by distilling crude oil by means of a normal pressure distillation unit, to thereby yield a full-range naphtha fraction; desulfurizing this fraction by means of a naphtha desulfurization unit; and distilling to yield a light naphtha fraction. The iso-paraffin-rich DLN according to the present invention can be produced through a treatment (e.g., isomerization) of the aforementioned DLN. Any method known in the art is employed for isomerization. Particularly, such DLN can be produced by bringing raw material oil into contact with a Pt-on-alumina catalyst, a Pt-on-zeolite catalyst, or a Pt-on-strong acid carrier catalyst.

In the present invention, desulfurized light naphtha undergoes isomerization through a method such as the aforementioned one, to thereby increase the ratio of iso-paraffin to normal paraffin as compared with desulfurized light naphtha employed as a raw material. The thus-isomerized desulfurized light naphtha can be used as a fuel-cell fuel oil. Alternatively, light naphtha undergoes isomerization through a method such as the aforementioned one, to thereby increase the ratio of iso-paraffin to normal paraffin as compared with light naphtha employed as a raw material. Subsequently, the thus-isomerized light naphtha can be desulfurized, and the product can be used as a fuel-cell fuel oil.

Such DLN preferably has a sulfur content of 1 wt. ppm or less, more preferably 0.1 wt. ppm or less. When the sulfur content is in excess of the above levels, catalyst poisoning by sulfur occurs, possibly raising problems such as deterioration of a reformation catalyst or a partial oxidation catalyst.

The DLN employed in the present invention preferably has a carbon atom/hydrogen atom ratio less than 0.45. As the ratio becomes lower, hydrogen formation efficiency increases, and the level of adverse effect on a reformation catalyst or electrodes of a fuel cell decreases.

The aromatic component content of DLN is preferably 1 wt.% or less. An aromatic component content in excess of the level may deteriorate hydrogen production efficiency.

The fuel-cell fuel oil of the present invention preferably has a vapor pressure of 0.098 MPa or less. When the vapor pressure is in excess of 0.098 MPa, the strength of a tank must be increased and release of hydrocarbons to air may be problematic. Thus, in the present invention, the vapor pressure preferably falls within a range of 0-0.098 MPa.

The aforementioned DLN has characteristics such as high purity of hydrogen produced therefrom and a small level of reduction in hydrogen partial pressure. Thus, it is preferably employed for producing hydrogen for use in a fuel cell. Particularly, DLN is suitable for a fuel cell for transportation by an automobile, etc., by virtue of its characteristics such as assuming a liquid form.

In order to form hydrogen from DLN, DLN is desulfurized in advance in accordance with needs. Desulfurization is typically performed through hydro-desulfurization. Specifically, the method employs a hydro-desulfurization catalyst such as Co-Mo/alumina or Ni-Mo/alumina, and a hydrogen sulfide adsorbent such as ZnO and is effected under normal pressure to 5 MPa, and 200-400°C.

Subsequently, the aforementioned DLN which has been desulfurized in accordance with needs undergoes steam reforming or partial oxidation. The present invention can provide a fuel oil which causes no carbon deposition onto a steam reforming catalyst or a similar material and which can effectively produce hydrogen.

Although no particular limitation is imposed on the steam reforming method, the following procedure is typically employed. No particular limitation is imposed on the steam reforming catalyst which is employed in the production of hydrogen, but the following is preferably employed.

Examples of metals held on a carrier include nickel (Ni), zirconium (Zr), and noble metals such as ruthenium (Ru), rhodium (Rh), and platinum (Pt). These metals may be used singly or in combination of two or more species.

Of these, a catalyst containing Ru held on a carrier is particularly preferred, and exerts remarkable effect on prevention of deposition of carbon during steam reforming reaction. The amount of Ru held on a carrier is preferably 0.05-20 wt.% based on the carrier, more preferably 0.05-15 wt.%, particularly preferably 0.1-2 wt.%. When the amount is less than 0.05 wt.%, an unfavorable, large decrease in activity of steam reforming reaction may occur, whereas when the amount is in excess of 20 wt.%, a remarkable increase in activity is difficult to attain.

Specific examples of combinations of metals held on a carrier include Ru and zirconium. Ru and zirconium may be held on a carrier simultaneously or individually. The zirconium content (as reduced to $ZrO_2$) is preferably 0.5-20 wt.% based on a carrier, more preferably 0.5-15 wt.%. Such metals held on a carrier are preferably combined with cobalt and/or magnesium. The cobalt content (atomic ratio of Co/Ru) is preferably 0.01-30, more preferably 0.1-30. The magnesium content (as reduced to MgO) is preferably 0.5-20 wt.%, more preferably 0.5-15 wt.%.

Inorganic oxides are used as the carrier of catalysts employed in steam reforming. Specific examples include alumina, silica, zirconia, magnesia, and mixtures thereof. Of these, alumina and zirconia are particularly preferred.

One preferred example of the steam reforming catalyst is a Ru-on-zirconia catalyst. The zirconia may be non-modified zirconia ($ZrO_2$) or a stabilized zirconia containing a stabilizing component such as magnesia. Examples of preferred stabilized zirconia include magnesia-stabilized zirconia, yttria-stabilized zirconia, and ceria-stabilized zirconia.

Other preferred examples of the steam reforming catalyst include a catalyst containing Ru and zirconium held on an alumina carrier, and a catalyst containing Ru and zirconium, and at least one of cobalt and/or magnesium held on an alumina carrier. Among alumina species, $\alpha$-alumina, having high heat resistance and mechanical strength, is particularly preferred.

In the production of hydrogen, steam reforming is performed advantageously when the ratio S/C (by mol), where S denotes steam (S) and C denotes carbon (C) originating from DLN, is typically 1.5-5, preferably 2-4, particularly preferably 2-3. When steam reforming is performed at an S/C ratio (by mol) higher than 5, an excessive amount of steam must be prepared, causing significant heat loss and deterioration in hydrogen production efficiency, whereas S/C ratio values of less than 1.5 disadvantageously decrease the amount of generated hydrogen.

Furthermore, in the production of hydrogen, steam reforming is preferably performed while the temperature of the inlet of a steam reforming catalyst layer is maintained at 630°C or lower.

The temperature of the inlet of a steam reforming catalyst layer, which tends to increase due to addition of oxygen, must be controlled. This is because when the inlet temperature is in excess of 630°C, pyrolysis of raw material hydrocarbon is promoted, and carbon deposits on the catalyst or a reactor tube wall via radicals generated during pyrolysis, sometimes causing difficulty in operation.

No particular limitation is imposed on the temperature of the outlet of a catalyst layer, but the temperature is preferably 650-800°C. This is because when the outlet temperature is lower than 650°C, the amount of formed hydrogen is insufficient, whereas when reaction is effected at an outlet temperature higher than 800°C, the reactor may be lined with heat-resistant material, resulting in economic disadvantages.

In the production of hydrogen, the reaction pressure is preferably ambient pressure to 3 MPa, more preferably ambient pressure to 1 MPa. The flow rate of DLN (as LHSV) typically falls within a range of 0.1-100 $h^{-1}$, preferably 0.2-50 $hr^{-1}$.

In the production of hydrogen, the aforementioned DLN can also be employed in a production method including the aforementioned steam reforming and partial oxidation in combination, thereby effectively producing hydrogen.

Partial oxidation reaction is typically carried out at a reaction pressure of ambient pressure to 5 MPa; a reaction temperature of 400-1,10O°C; an oxygen/carbon ratio of 0.2-0.8; and an LHSV of 0.1-100 h$^{-1}$, preferably in the presence of a catalyst containing a noble metal (e.g., ruthenium) and nickel or a similar metal held on a heat-resistant oxide carrier. In the case in which steam is added, partial oxidation is typically carried out at an S/C ratio of 0.4-4.

In the aforementioned hydrogen production method, CO which is generated through the aforementioned steam reforming adversely affects formation of hydrogen. Thus, CO is preferably removed by transforming CO to $CO_2$ through reaction.

Next, the fuel-cell fuel oil II of the present invention will be described.

The fuel-cell fuel oil II of the present invention contains deeply desulfurized light naphtha. As described in relation to the aforementioned fuel-cell fuel oil I, desulfurized light naphtha comprises C4 to C7 normal paraffin, iso-paraffin, naphthene, etc. Generally, desulfurized light naphtha is produced by distilling crude oil by means of a normal pressure distillation unit, to thereby yield a light naphtha fraction and desulfurizing the light naphtha fraction by means of a naphtha desulfurization unit. Alternatively, DLN is produced by distilling crude oil by means of a normal pressure distillation unit, to thereby yield a full-range naphtha fraction; desulfurizing this fraction by means of a naphtha desulfurization unit; and distilling to yield a light naphtha fraction.

The "deeply desulfurized light naphtha" of the present invention refers to a naphtha which typically has a boiling point of approximately 40-100°C; comprises C4 to C7 normal paraffin, iso-paraffin, naphthene, etc.; and is prepared by further treating the aforementioned desulfurized light naphtha such that the sulfur content thereof is typically controlled to be 0.5 wt. ppm or less, preferably 0.1 wt. ppm or less, more preferably 0.05 wt. ppm or less, particularly preferably 0.02 wt. ppm or less or is prepared by desulfurizing naphtha under more rigorous conditions as compared with those typically employed in desulfurization. When the sulfur content is in excess of the above levels, a reformation catalyst is poisoned by sulfur, raising problems such as deterioration of a reformation catalyst or a partial oxidation catalyst.

The aforementioned deeply desulfurized light naphtha can be produced, for example, by reacting raw material oil and hydrogen in the presence of a catalyst conventionally added to a naphtha desulfurization unit (e.g., Co·Mo/alumina or Ni·W/alumina) generally under the following conditions: at 1.0-2.5 MPa and 250-350°C; a liquid hourly space velocity (LHSV) of 3-10 hr$^{-1}$; and a hydrogen/raw material oil of 50-150 m$^3$/kl.

The deeply desulfurized light naphtha of the present invention can be prepared, for example, by subjecting the desulfurized light naphtha obtained through the aforementioned method to repeated desulfurization so as not to deviate from the aforementioned desulfurization method. Alternatively, the deeply desulfurized light naphtha of the present invention can be prepared by subjecting the desulfurized light naphtha which has undergone the aforementioned desulfurization once or repeatedly to desulfurization through adsorption by use of the below-described specific catalyst. Specifically, examples of the catalyst which can be employed in desulfurization through adsorption include activated carbon; activated carbon fiber; silica gel; hydrophobic silica; zeolite; metal-substituted zeolite; alkali/alkaline earth metal oxides; hydroxides thereof; salts such as sulfite hydrates thereof; metals such as Pb, Sn, Fe, Ni, Co, Mn, Cr, Cu, and Zn; oxides thereof; mixtures thereof; complex oxides thereof; and those held on a carrier (e.g., silica, alumina, silica-alumina, titania, zirconia, magnesia, zinc oxide, terra alba, diatomaseous earth, or clay); and these catalysts further containing an alkali/alkaline earth metal or a rare earth metal such as Ce, La, or Y held on a carrier. In addition, a catalyst containing a noble metal (e.g., Pt, Pd, Rh, or Ru) held on the aforementioned carrier can also be used.

The aforementioned metals such as Pb, Sn, Fe, Ni, Co, and Cu, and noble metals such as Pt, Pd, Rh, and Ru preferably undergo reduction treatment prior to use thereof.

Examples of preferred catalysts which can be employed in the aforementioned desulfurization through adsorption include catalysts containing one or more species selected from Pb, Sn, Fe, Ni, Co, Mn, Cr, Cu, and Zn held on a carrier. In addition, these catalysts further containing an alkali/alkaline earth metal or a rare earth metal such as Ce, La, or Y held on a carrier are also preferable. These metals preferably undergo reduction treatment prior to use thereof, and these metals can also be used after being stabilized through treatment by use of carbonate gas or a similar material.

In a preferred mode of the present invention, desulfurized light naphtha which has not been "deeply desulfurized" (e.g., desulfurized light naphtha having a sulfur content in excess of 0.5 wt. ppm) is subjected to desulfurization through adsorption by use of a variety of the aforementioned catalysts, to thereby yield deeply desulfurized light naphtha.

Particularly, the deeply desulfurized light naphtha for use in a fuel oil composition employable in both a hybrid engine and a fuel cell can be produced by desulfurization; for example, through a hydro-refining method, followed by optional desulfurization by use of a nickel-based adsorption desulfurizing agent.

The aforementioned hydro-refining method employs a desulfurization catalyst which is prepared by mixing transition metals (e.g., nickel, cobalt, molybdenum, and tungsten) in appropriate proportions and causing the resultant mixture in the form of metal, oxides, sulfides, or another form thereof to be held on a carrier predominantly comprising alumina. The following is an example set of reaction conditions that can be applied: reaction temperature of 250-400°C; pressure of 2-10 MPa·G; a hydrogen/oil ratio (by mol) of 2-10, and a liquid hourly space velocity (LHSV) of 1-5 $h^{-1}$.

With regard to the aforementioned nickel-based adsorption desulfurizing agent, there is employed an agent in which a nickel component (as metallic nickel) is held on an appropriate carrier in an amount of typically 30 wt.% or more based on the total amount of the desulfurizing agent, preferably 50-70 wt.%.

Among the carriers, porous carriers are preferred, and porous materials of an inorganic oxide are particularly preferred. Examples of the carriers include silica, alumina, silica-alumina, titania, zirconia, magnesia, zinc oxide, terra alba, diatomaseous earth, or clay. These species may be used singly or in combination of two or more species. Of these, silica-alumina is particularly preferred.

In addition to nickel, the adsorption desulfurizing agent may further contain small amounts of metals such as copper, cobalt, iron, manganese, and chromium, in accordance with needs.

The following method can be applied as a method for desulfurizing light naphtha by use of the aforementioned nickel-based adsorption desulfurizing agent.

First, hydrogen is fed in advance to a desulfurization column in which the aforementioned nickel-based adsorption desulfurizing agent is charged, and the nickel-based adsorption desulfurizing agent is reduced at approximately 150-400°C. Subsequently, light naphtha is allowed to pass through the desulfurization column upward or downward, thereby performing desulfurization under the following conditions: ambient temperature to approximately 400°C; ambient pressure to approximately 1 MPa·G; and a liquid hourly space velocity (LHSV) of approximately 0.02-10 $h^{-1}$. In this case, a small amount of water may be co-present.

The fuel-cell fuel oil II of the present invention contains the thus-produced deeply desulfurized light naphtha, and the content is preferably at least 10% by volume, more preferably at least 50% by volume. When the deeply desulfurized light naphtha content is less than 10% by volume, a reformation catalyst might be unfavorably deteriorated. The fuel oil of the present invention appropriately contains deeply desulfurized light naphtha components of a variety of sulfur contents, in accordance with the purpose. The fuel oil can also be employed when further containing a supplementary material, in accordance with needs.

In the fuel-cell fuel oil II of the present invention, the aforementioned deeply desulfurized light naphtha and a supplementary material miscible with the naphtha may be used in combination. Examples of the miscible supplementary material include alkylate (ALK), methyl tert-butyl ether (MTBE), isopentane, desulfurized light naphtha (excluding the deeply desulfurized light naphtha of the present invention), isomerized desulfurized light naphtha, and desulfurized heavy naphtha.

On the basis of the same criteria as used in the case of the aforementioned deeply desulfurized light naphtha, the thus-produced fuel-cell fuel oil II of the present invention preferably has a sulfur content of 1 wt. ppm or less, more preferably 0.5 wt. ppm or less, particularly preferably 0.1 wt. ppm or less, still more preferably 0.05 wt. ppm or less.

The fuel-cell fuel oil II of the present invention preferably has an aromatic component content of 1 wt.% or less. An aromatic component content in excess of the level may deteriorate hydrogen production efficiency.

The fuel-cell fuel oil II of the present invention preferably has a vapor pressure of 0.098 MPa or less. When the vapor pressure is in excess of 0.098 MPa, the strength of a tank must be increased and release of hydrocarbons to air may be problematic. Thus, in the present invention, the vapor pressure preferably falls within a range of 0-0.098 MPa.

The fuel-cell fuel oil II of the present invention has characteristics such as high purity of hydrogen produced therefrom and a small level of reduction in hydrogen partial pressure. Thus, it is preferably employed for producing hydrogen for use in a fuel cell. Particularly, the fuel-cell fuel oil II is suitable for a fuel cell for transportation by an automobile, etc., by virtue of its characteristics such as assuming a liquid form.

In order to form hydrogen from the fuel-cell fuel oil II, the fuel-cell fuel oil II is typically desulfurized in advance in accordance with needs. The same description as provided in relation to the aforementioned the fuel-cell fuel oil I is also applicable to the method of desulfurization. However, since the present invention employs the aforementioned deeply desulfurized light naphtha, the above desurfurization step can be omitted, depending on the amount of deeply desulfurized light naphtha employed.

Subsequently, the aforementioned fuel oil which has been desulfurized in accordance with needs undergoes steam reforming or partial oxidation. The present invention can provide a fuel oil which causes no carbon deposition on a steam reforming catalyst or a similar material and which can effectively produce hydrogen.

The same description as provided in relation to the aforementioned the fuel-cell fuel oil I is also applicable to the catalyst, reaction conditions, etc. in the aforementioned steam reforming and partial oxidation.

When the fuel-cell fuel oil II of the present invention containing deeply desulfurized light naphtha is used as a fuel oil in the production of hydrogen, as mentioned above, desulfurization carried out in the above desurfurization step can be omitted, depending on the amount of deeply desulfurized light naphtha employed. Thus, a reforming unit for producing hydrogen having no desulfurizer, depending on the case, can also be used as the reforming unit for producing hydrogen employed in such hydrogen production. In other words, a generally employed reforming unit for producing hydrogen mainly comprises a desulfurizer for carrying out the aforementioned desulfurization step with respect to fuel oil; a reformer for subsequently carrying out the aforementioned steam reforming or partial oxidation of the desulfurized fuel oil so as to produce hydrogen; and a transformer for removing the aforementioned CO from the reformed gas. However, the present invention can provide a reforming unit for producing hydrogen which allows direct introduction of fuel oil to a reformer without providing the aforementioned desulfurizer, through employment of deeply desulfurized light naphtha serving as a fuel oil.

The present invention also provides a fuel cell to which the aforementioned fuel oil I or II is applied as a fuel. A hydrogen-containing gas produced from the aforementioned fuel oil can be used suitably in a variety of $H_2$-combustion-type fuel cells. Particularly, the gas can be advantageously utilized as a fuel fed to a variety of $H_2$-combustion-type fuel cells having at least a platinum (platinum catalyst) fuel electrode (negative electrode) (low-temperature-operable fuel cells; e.g., phosphate fuel cells, KOH fuel cells, solid polymer fuel cells).

The fuel oil composition of the present invention will next be described.

The fuel oil composition of the present invention, containing deeply desulfurized light naphtha, is employable in both a hybrid engine and a fuel cell. The same description as provided in relation to the aforementioned fuel-cell fuel oil II is also applicable to the sulfur content and the preparation method of the aforementioned deeply desulfurized light naphtha.

The fuel oil composition of the present invention advantageously preferably contains, as a supplementary material, the aforementioned desulfurized light naphtha in an amount of 10% by volume or more, more preferably 50% by volume or more, most preferably 80% by volume or more.

The supplementary material miscible with the deeply desulfurized naphtha may be at least one species selected from among alkylate, methyl tert-butyl ether, isopentane, ordinary desulfurized light naphtha (not deeply desulfurized), isomerized desulfurized light naphtha, deeply desulfurized heavy naphtha, ordinary desulfurized heavy naphtha (not deeply desulfurized), and like materials.

The fuel oil composition of the present invention preferably has a sulfur content of 1 wt. ppm or less. When the content is in excess of 1 wt. ppm, a reformation catalyst is poisoned, thereby shortening the service life of the catalyst, when the composition is used as a fuel for a fuel cell. More preferably, the sulfur content is 0.5 wt. ppm or less, particularly preferably 0.1 wt. ppm or less.

The fuel oil composition of the present invention preferably contains a detergent-dispersant, since the composition is also employed in a hybrid engine. The detergent-dispersant content preferably falls within a range of 10-1,000 wt. ppm. When the content is less than 10 wt. ppm, the effect of addition of the detergent-dispersant might not be fully attained, whereas when the content is in excess of 1,000 wt. ppm, a reformation catalyst may be adversely affected when the composition is used as a fuel-cell fuel. In consideration of the effect of addition of a detergent-dispersant and effects on a reformation catalyst, the detergent-dispersant content preferably falls within a range of 50-500 wt. ppm.

The aforementioned detergent-dispersant must have no effect on a reformation catalyst and electrodes of a fuel cell when the fuel oil composition is used as a fuel-cell fuel. Particularly, polyether amine is suitable for such a detergent-dispersant, in view of the effect and in that polyether amine does not affect a reformation catalyst and electrodes of a fuel cell.

The fuel oil composition of the present invention may further contain a variety of optional additives which are generally employed in a conventional fuel oil for gasoline engines, within a range where a reformation catalyst and fuel-cell electrodes contained in a fuel cell are not affected. Examples of the additives include an antioxidant, a surface ignition-preventing agent, an anti-icing agent, a combustion improver, an antistatic agent, an anticorrosive, an identifier, an odorant, and a colorant.

When hydrogen is produced from the fuel oil composition of the present invention as a fuel-cell fuel, either steam reforming or partial oxidation may be employed.

The same description as provided in relation to the aforementioned the fuel-cell fuel oil I is also applicable to the catalyst and reaction conditions employed in the aforementioned steam reforming and partial oxidation.

When the fuel oil composition of the present invention is employed as a fuel for a hybrid engine, a preferred internal combustion engine of the hybrid engine is a direct injection engine. The direct injection engine is a type of engine in which a fuel is injected directly into a cylinder. In the combustion cylinder, the air-fuel ratio can be elevated; i.e., an air-fuel mixture can be diluted, thereby improving fuel consumption.

According to the system for driving an automobile of the present invention, in the aforementioned automobile mounting a hybrid engine, the aforementioned fuel oil composition of the present invention is employed as a fuel, and the system is configured such that driving within a high load region is basically performed by a motor and driving within a low load region is basically performed by an internal combustion engine. The internal combustion engine is preferably used mainly in order to charge the motor.

The present invention will next be described in more detail by way of examples, which should not be construed as limiting the invention thereto.

Example 1

Hydrogen was fed to DLN having the composition and properties shown in Table 1, and the mixture was subjected to isomerization in the presence of a Pt (0.5 wt.%)-on-$Al_2O_3$ catalyst at 1.96 MPa and 160°C and a liquid hourly space velocity (LHSV) of 1.0 $hr^{-1}$. The composition and properties of the resultant DLN are shown in Table 1.

Table 1

| Items | DLN before isomerization | DLN after isomerization |
|---|---|---|
| Sulfur content (wt. ppm) | 0.30 | 0.27 |
| n-Paraffin | 53.2 | 22.2 |
| $C_4$ | 0.4 | 0.2 |
| $C_5$ | 28.5 | 13.0 |
| $C_6$ | 23.8 | 8.6 |
| $C_7$ | 0.5 | 0.4 |
| iso-Paraffin (wt.%) | 38.7 | 69.6 |
| $C_4$ | 0.0 | 0.2 |
| $C_5$ | 14.9 | 30.5 |
| $C_6$ | 21.8 | 36.9 |
| $C_7$ | 2.0 | 2.0 |
| iso-/n- Paraffin ratio | 0.72 | 3.10 |
| Naphthene content (wt.%) | 6.6 | 7.2 |
| Aromatics content (wt.%) | 1.6 | 1.0 |
| Olefin content (wt.%) | 0 | 0 |
| Vapor pressure (MPa) | 0.077 | 0.087 |

The thus-produced isomerized DLN was subjected to the below-described hydrogen production experiment. A coking test was carried out with respect to the catalyst after reaction.

Hydrogen production experiment

Two immobilized-bed flow reactors were linked. Desulfurization was performed in a first stage, and steam reforming was performed in a second stage, under the following conditions.

(First stage) Desulfurization

Catalyst: Co-Mo (1st)/ZnO (2nd)
Conditions: ambient pressure, 330°C, LHSV = 1.3 $h^{-1}$

(Second stage) Reformation

Catalyst: Water (20 wt.%) was added to α-alumina powder, and the resultant mixture was kneaded and press-molded by use of a kneader, to thereby form a cylindrical compact (diameter: 5 mm, length: 5 mm). The compact was dried at 200°C for three hours and fired at 1,280°C for 26 hours, to thereby yield an alumina carrier. To an aqueous solution containing zirconium oxychloride (ZrO(OH)Cl) (2.5 g as reduced to $ZrO_2$), ruthenium trichloride ($RuCl_3/nH_2O$) (Ru content: 38 wt.%) (0.66 g), cobalt nitrate ($Co(NO_3)\cdot 6H_2O$) (2.47 g), and magnesium nitrate (Mg ($NO_3$) $\cdot$ $6H_2O$) (6.36 g) were added, and the mixture was stirred until the components were completely dissolved. The total volume of the resultant solution was 10 cc. The aforementioned alumina carrier (50 g) was impregnated with the solution (i.e., pore filling method), followed by drying at 120°C for five hours. The dried product was fired at 500°C for two hours, and the particle size of the fired product was adjusted to 16-32 mesh. The thus-formed catalyst contained Ru (0.5 wt.% ), Zr (5 wt.% as reduced to zirconia), Co (1.0 wt.%), and Mg (2 wt.% as reduced to magnesia), based on the carrier.

Conditions: steam/carbon ratio = 1.5, LHSV (raw material oil) = 2.5 $h^{-1}$, ambient pressure, catalyst layer inlet temperature; 500°C, and catalyst layer outlet temperature; 700°C.

After the aforementioned reaction had been performed for 100 hours without interruption, the catalyst of the second stage was removed. The percent carbon deposition on the catalyst was measured and calculated by the following formula:

Percent carbon deposition (%) = (length of carbon-deposited

portion)/(full length of the catalyst),

and was found to be 1%.

Examples 2 to 5 and Comparative Examples 1 and 2

Deeply desulfurized light naphtha A to C and desulfurized light naphtha D (hereinafter these naphtha samples are collectively called "DLN") were prepared through the following process. Fuel oils having compositions shown in Table 2 were prepared from the naphtha samples. These fuel oils were subjected to the below-described hydrogen production experiment, and the catalyst which had been employed in the experiment by use of each fuel oil was subjected to the coking test. In the following Examples, sulfur content was measured in accordance with the method described in JIS-K2541.

(1) Deeply desulfurized light naphtha A (sulfur content: 0.5 wt. ppm)

Catalyst: Co·Mo/alumina
Operational conditions of reaction column: 1.5 MPa, 300°C, LHSV; 6.3 $hr^{-1}$, and hydrogen/raw material oil ratio; 90 $m^3$/kl.
Fraction conditions: plate stage number; 23, column top pressure; 0.10 MPa, column top temperature; 73°C, and reflux ratio; 0.26.

(2) Deeply desulfurized light naphtha B (sulfur content: 0.1 wt. ppm)

Catalyst: Co·Mo/alumina
Operational conditions of reaction column: 1.5 MPa, 320°C, LHSV; 6.3 $hr^{-1}$, and hydrogen/raw material oil ratio; 90 $m^3$/kl.
Fraction conditions: plate stage number; 23, column top pressure; 0.10 MPa, column top temperature; 73°C, and reflux ratio; 0.26.

(3) Deeply desulfurized light naphtha C (sulfur content: 0.008 wt. ppm)

The aforementioned desulfurized light naphtha B was subjected to adsorption desulfurization in a reactor (20 cc) filled with Ni/diatomaceous earth (Ni content: 50 wt.%) serving as an adsorption catalyst, under the conditions: ambient pressure; 140°C; and LHSV; 0.2 $hr^{-1}$.

(4) Desulfurized light naphtha D (sulfur content: 4.8 wt. ppm)

Catalyst: Co·Mo/alumina
Operational conditions of reaction column: 1.5 MPa, 270°C, LHSV; 6.3 hr$^{-1}$. and hydrogen/raw material oil ratio; 90 m$^3$/kl.
Fraction conditions: plate stage number; 23, column top pressure; 0.10 MPa, column top temperature; 73°C, and reflux ratio; 0.26.

Hydrogen production experiment

Steam reformation was carried out by use of an immobilized-bed flow reactor.

Catalyst: Employed was a catalyst that had been prepared in a manner similar to that for preparing the catalyst employed in the second stage (reformation) of the hydrogen production experiment of Example 1.
Conditions: steam/carbon ratio = 2.5, LHSV (raw material oil) = 5 h$^{-1}$, ambient pressure, catalyst layer inlet temperature; 500°C, and catalyst layer outlet temperature; 750°C.

The reformation catalyst was charged into a reactor tube. The catalyst life (with respect to steam reforming) was evaluated as the time required for lowering the conversion to below 100% under the aforementioned conditions. The results are shown in Table 2.

Table 2

| Items | Ex. 2 | Ex. 3 | Ex. 4 | Ex. 5 | Comp. Ex. 1 | Comp. Ex. 2 |
|---|---|---|---|---|---|---|
| DLN | Deeply desulfurized light naphtha A | Deeply desulfurized light naphtha B | Deeply desulfurized light naphtha C | Deeply desulfurized light naphtha C | Desulfurized light naphtha D | Desulfurized light naphtha D |
| Fuel oil composition (vol.%) | DLN 100 | DLN 100 | DLN 100 | DLN 70 DHN 30 | DLN 100 | DLN 10 ALK 90 |
| S content (wt. ppm) in DLN in Fuel oil | 0.5 0.5 | 0.1 0.1 | 0.008 0.008 | 0.008 0.08 | 4.8 4.8 | 4.8 2.4 |
| Catalyst life (hr) | 200 | 960 | ≥10,000 | 3,300 | 20 | 36 |

*DHN: Desulfurized heavy naphtha

*ALK: Alkylate

EP 1 243 636 A1

Examples 6 to 8 and Comparative Example 3

Fuel oil compositions having properties shown in Table 3 were prepared, and the performance of each composition was evaluated in accordance with the following procedure.

(1) Service life of a reformation catalyst when each composition was employed as a fuel for a fuel cell

(A) Reformation catalyst

Employed was a catalyst that had been prepared in a manner similar to that for preparing the catalyst employed in the second stage (reformation) of the hydrogen production experiment of Example 1.

(B) Evaluation of the service life of the reformation catalyst

The aforementioned reformation catalyst (A) was charged into a reactor tube. Each of the aforementioned fuel oil compositions was subjected to steam reforming under the following conditions: atmospheric pressure, steam/carbon ratio (by mol); 2.5, LHSV; 3 $h^{-1}$, catalyst layer inlet temperature; 500°C, and catalyst layer outlet temperature; 750°C.
The catalyst life was evaluated as the time required for lowering the below-described conversion to below 100%.
The results are shown in Table 3.

<Conversion>

Conversion was calculated on the basis of the following formula:

$$\text{Conversion (\%)} = 100 \times B/A$$

(wherein A represents the total carbon amount per hour (by mol) of the fed fuel oil composition; B represents the total carbon amount per hour (by mol) in the outlet gas of the reforming unit; and B = $CO + CO_2 + CH_4$). Carbon amount analysis was carried out through gas chromatography.

(2) Nozzle cleanliness when each composition was employed as a fuel for a hybrid engine

Cleanliness of a nozzle was evaluated on the basis of CRC (Coordinating Research Council) Report No. 665, which is a method of evaluating nozzle deposits generated in a nozzle in a gasoline engine of inlet port fuel injection type.
The results are shown in Table 3.

Table 3

| Fuel oil composition | Light naphtha | Type | Ex. 6 DLN-1 (Deeply desulfurized) | Ex. 7 DLN-2 (Deeply desulfurized) | EX. 8 DLN-2 (Deeply desulfurized) | Comp. Ex. 3 DLN-3 (Desulfurized) |
|---|---|---|---|---|---|---|
| | | Content (vol%) | 100 | 100 | 100 | 100 |
| | Polyether-amine (wtppm) | | — | — | 100 | — |
| | Sulfur content (wtppm) | | 0.5 | 0.1 | 0.1 | 4.8 |
| Performance evaluation | Service life of reformation catalyst (hr) | | 1,000< | 1,000< | 1,000< | 200 |
| | Cleanliness of nozzle* | | CC | BB | AA | DD |

*Percent reduction of nozzle flow rate after running for 10,000 miles, evaluated with ratings: AA (2% or less); BB (4% or less); CC (5% or less); and DD (higher than 5%).

EP 1 243 636 A1

**EP 1 243 636 A1**

Industrial Applicability

Through employment of a fuel oil predominantly containing desulfurized light naphtha having a ratio by weight of iso-paraffin to normal paraffin of at least 1, or a fuel oil comprising deeply desulfurized light naphtha, the present invention provides a fuel-cell fuel oil which can produce hydrogen for use in a fuel cell at high efficiency; has no adverse effect on a reformation catalyst and electrodes of a fuel cell; causes less deterioration of a reformation catalyst or a similar material; and is suitable for transportation by automobiles, etc.

The fuel oil containing deeply desulfurized light naphtha can be used in both a hybrid engine and a fuel cell. In addition, when the fuel oil is employed as a fuel for an automobile hybrid engine, running performance of the automobile is not deteriorated.

**Claims**

1. A fuel oil for use in a fuel cell comprising, as a predominant component, desulfurized light naphtha having a ratio by weight of iso-paraffin to normal paraffin of at least 1.

2. A fuel oil for use in a fuel cell according to claim 1, wherein the ratio by weight of iso-paraffin to normal paraffin contained in the desulfurized light naphtha is at least 1.5.

3. A fuel oil for use in a fuel cell according to claim 1, which has a vapor pressure of 0.098 MPa or lower.

4. A fuel oil for use in a fuel cell according to claim 1, which comprises isomerized desulfurized light naphtha which is obtained through isomerization of raw material desulfurized light naphtha, to thereby increase the ratio by weight of iso-paraffin to normal paraffin as compared with the raw material desulfurized light naphtha; or through isomerization of raw material light naphtha, to thereby increase the ratio by weight of iso-paraffin to normal paraffin as compared with the raw material light naphtha, followed by desulfurization.

5. A fuel cell which employs a fuel oil as recited in any one of claims 1 to 4.

6. A fuel oil for use in a fuel cell **characterized by** comprising deeply desulfurized light naphtha.

7. A fuel oil for use in a fuel cell according to claim 6, wherein the deeply desulfurized light naphtha contains sulfur in an amount of 0.5 ppm by weight or less.

8. A fuel oil for use in a fuel cell according to claim 6, wherein the deeply desulfurized light naphtha contains sulfur in an amount of 0.1 ppm by weight or less.

9. A fuel oil for use in a fuel cell according to claim 6, wherein the deeply desulfurized light naphtha contains sulfur in an amount of 0.05 ppm by weight or less.

10. A fuel oil for use in a fuel cell according to claim 6, which contains deeply desulfurized light naphtha in an amount of at least 10% by volume and contains sulfur in an amount of 1 ppm by weight or less.

11. A fuel oil for use in a fuel cell according to claim 10, which contains deeply desulfurized light naphtha in an amount of at least 50% by volume.

12. A fuel oil for use in a fuel cell according to claim 6, which contains deeply desulfurized light naphtha in an amount of at least 50% by volume and contains sulfur in an amount of 0.1 ppm by weight or less.

13. A fuel cell which employes a fuel oil as recited in any one of claims 6 to 12.

14. A method for producing hydrogen from a fuel oil for use in a fuel cell as recited in any one of claims 6 to 12, **characterized by** performing no desulfurization.

15. A reforming unit for producing hydrogen **characterized by** employing a fuel oil for use in a fuel cell as recited in any one of claims 6 to 12 and comprising no desulfirizer.

**14**

**EP 1 243 636 A1**

16. A fuel oil composition which contains deeply desulfurized light naphtha and is employable in both a hybrid engine and a fuel cell.

17. A fuel oil composition according to claim 16, which contains sulfur in a concentration of 1 ppm by weight or less.

18. A fuel oil composition according to claim 16, which contains sulfur in a concentration of 0.5 ppm by weight or less.

19. A fuel oil composition according to claim 16, which further contains a detergent-dispersant.

20. A fuel oil composition according to claim 19, which contains the detergent-dispersant in an amount of 10-1,000 ppm by weight.

21. A fuel oil composition according to claim 16, which comprises a supplementary material containing deeply desulfurized light naphtha in an amount of at least 10% by volume.

22. A fuel oil composition according to claim 19, which contains a supplementary material constituted solely by deeply desulfurized light naphtha.

23. An automobile driving system for driving an automobile mounting a hybrid engine, wherein the automobile employs, as a fuel, a fuel oil composition as recited in any one of claims 16 to 22, and the system is configured such that driving within a high load region is basically performed by a motor and driving within a low load region is basically performed by an internal combustion engine.

24. An automobile driving system according to claim 23, wherein the system is configured such that driving is performed by the motor and the internal combustion engine is employed mainly for charging the motor.

25. An automobile driving system according to claim 23, wherein the internal combustion engine is a direct injection gasoline engine.

## INTERNATIONAL SEARCH REPORT

| | |
|---|---|
| International application No. | |
| | PCT/JP00/08946 |

**A. CLASSIFICATION OF SUBJECT MATTER**
Int.Cl⁷ C10L1/04, H01M8/06

According to International Patent Classification (IPC) or to both national classification and IPC

**B. FIELDS SEARCHED**

Minimum documentation searched (classification system followed by classification symbols)
Int.Cl⁷ C10L1/04, C10G35/00, C01B3/24, H01M8/06

Documentation searched other than minimum documentation to the extent that such documents are included in the fields searched
Jitsuyo Shinan Koho        1922-1996    Toroku Jitsuyo Shinan Koho   1994-2001
Kokai Jitsuyo Shinan Koho  1971-2001    Jitsuyo Shinan Toroku Koho   1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 6-80972, A (Sekiyu Sangyo Kasseika Center), 22 March, 1994 (22.03.94), Claim 1; Par. Nos. [0002], [0006]; [table 2] | 6-12 |
| Y | Par. Nos. [0019], [0049]   (Family: none) | 1-5,13-25 |
| Y | JP, 63-40702, A (NIPPON OIL COMPANY, LTD.), 22 February, 1988 (22.02.88), page 2, lower right column, lines 16 to 20; page 4, upper left column, lines 2 to 5 | 1-2,4-5 |
| | page 2, upper left column, lines 10 to 13; page 3, upper left column, lines 11 to 17 Claims   (Family: none) | 3,14-15,17 |
| Y | JP, 63-150380, A (Idemitsu Kosan Co., Ltd.), 23 June, 1988 (23.06.88), Claim 4   (Family: none) | 1-2 |
| Y | JP, 9-208971, A (Idemitsu Kosan Co., Ltd.), 12 August, 1997 (12.08.97), Claim 3   (Family: none) | 19-20 |
| Y | JP, 11-311136, A (Hitachi, Ltd.), | 16,23-25 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 March, 2001 (08.03.01) | 21 March, 2001 (21.03.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP00/08946 |

C (Continuation). DOCUMENTS CONSIDERED TO BE RELEVANT

| Category* | Citation of document, with indication, where appropriate, of the relevant passages | Relevant to claim No. |
| --- | --- | --- |
| | 09 November, 1999 (09.11.99), Claims 1, 4; Par. No. [0015]    (Family: none) | |
| Y | JP, 9-79063, A (Toyota Motor Corporation), 25 March, 1997 (25.03.97), Par. Nos. [0010] to [0012]; Fig. 10 Par. No. [0022]   (Family: none) | 23-24 25 |

Form PCT/ISA/210 (continuation of second sheet) (July 1992)

## INTERNATIONAL SEARCH REPORT

| International application No. |
| --- |
| PCT/JP00/08946 |

**Box I   Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

Inventions of claims 1 to 5 relate to a fuel oil for a fuel cell which comprises, as a main component, a desulfurized light naphtha having a ratio of iso-paraffins to normal paraffins of 1 or more by weight, and inventions of claims 6 to 12 relate to a fuel oil for a fuel cell, characterized as containing a deep desulfurized light naphtha and are not dependent on any of claims 1 to 5.

The above two groups of inventions have differently defined "desulfurized light naphthas" as constituent features, respectively, as pointed out in the above, and the former group comprises the naphtha defined in claim 1 as a main component, whereas the latter does not necessarily contain the naphta defined in claim 6 as a main component. Therefore, the two groups of inventions have only one common matter of "a fuel oil for a fuel cell", which is not a special technical feature in accordance with PCT Rule 13.2.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest.

☒ No protest accompanied the payment of additional search fees.

Form PCT/ISA/210 (continuation of first sheet (1)) (July 1992)